# EUROPEAN PATENT APPLICATION

(11) **EP 3 367 501 A1**
(43) Date of publication of application: **29.08.2018**
(21) Application number: 16857635.3
(22) Date of filing: 27.06.2016
(51) Int. Cl.: H01Q 7/00, H01Q 1/24, B25J 11/00, G05B 19/05

(54) **ROTARY-TYPE SMART AUTOMATIC MANUFACTURING APPARATUS FOR PLANAR COIL ANTENNA**

(30) Priority: 23.10.2015 KR 20150147824
(71) Applicant: Tomsco, Namyangju-si, Gyeonggi-do 12199 (KR); Cho, Oh-Sung, Gunpo-si, Gyeonggi-do 15866 (KR)
(72) Inventor: CHO, Oh-Sung, Gunpo-si Gyeonggi-do 15866 (KR); LEE, Gye-san, Yongin-si Gyeonggi-do 16817 (KR)
(74) Representative: Arth, Hans-Lothar
(86) International application number: PCT/KR2016/006834
(87) International publication number: WO 2017/069377

(57) **Abstract**

The objective of the present invention is to provide a rotary-type smart automatic manufacturing apparatus for a planar coil antenna, the apparatus comprising: a main body (100); a rotary-type robot drive module (200); a hexagon coil antenna forming module (300); a touch screen unit (400); and a PLC control module (500), whereby the apparatus can automatically form a planar coil antenna with a flattened surface by performing planar-coil winding, pressing, cold-pressing, transferring, air spraying, and preheating processes on a received planar rectangular wire while sequentially rotating at one place in a rotary manner, which makes it possible to: do a work without a plurality of workers and reduce 80% of personnel expenses over the related art through the automation of the entire process; manufacture a good planar coil antenna with a uniformly-flattened surface by primarily flattening the coil antenna using the force of a press and secondarily flattening the coil antenna using the force of a press and a cold-spraying process when manufacturing the planar rectangular coil antenna; and mass-produce a planar coil antenna with a flattened surface through planar-coil winding, pressing, cold-pressing, transferring, air spraying, and pre-heat driving processes using first to sixth robot arms driven under the control of the PLC control module.

## Description

### [Technical Field]

The present invention relates to an apparatus for automatically manufacturing a planar coil antenna for use in smart devices (smartphones or smart watches), and more particularly to a rotary-type smart automatic manufacturing apparatus for a planar coil antenna, which automatically forms a planar coil antenna having a planarized surface by performing planar-coil winding, pressing, cold-pressing, transferring, air spraying, and preheating processes on a received rectangular planar wire while sequentially rotating in one place in a rotary manner.

### [Background Art]

Recent personal mobile communication terminals provide wireless communication service so that users can exchange audio signals and data using compact terminals regardless of time and place.

Personal mobile communication has already played a key role in next-generation mobile communication, and it is expected that demand for the same will be increased in the future and that it will play an important role in the national communication network backbone.

In addition, it is possible to easily provide multimedia services such as provision of image data or the like via personal mobile communication and to realize complementary cellular network design.

In personal mobile communication, an antenna of a terminal is the most important part in determining transmission and reception characteristics.

Particularly, an antenna needs to exhibit excellent performance with low power.

Furthermore, it is required to increase a gain as high as possible while minimizing the size of an antenna.

According to a conventional manufacturing method, an antenna is formed by applying coils to a printed circuit board, a flexible printed circuit board, a sheet, an insulation film, a substrate, or the like, and subsequently a plurality of layers of conductive films, plating films, masks and tape are formed on the top and bottom surfaces of the antenna.

However, because the entire process of manufacturing an antenna is performed manually or semi-automatically, it requires a large number of workers. Thus, production costs increase due to high personnel expenses.

Further, in the process of manufacturing a rectangular planar coil antenna, because an additional planarization process needs to be performed on the irregularly protruding surface of a wound planar coil antenna, the manufacturing process is time consuming. Furthermore, in spite of the planarization process, the height of the surface of the wound antenna is uneven, leading to the frequent occurrence of product defects such as degradation of the performance of the antenna and difficulty in achieving mass production.

### [Disclosure]

### [Technical Problem]

Therefore, the present invention has been made in view of the above problems, and it is an object of the present invention to provide a rotary-type smart automatic manufacturing apparatus for a planar coil antenna, which is capable of automating all processes of manufacturing a planar coil antenna, of manufacturing a high-quality planar coil antenna having an evenly planarized surface, and of achieving mass production of a planar coil antenna having a planarized surface.

### [Technical Solution]

In accordance with the present invention, the above and other objects can be accomplished by the provision of a rotary-type smart automatic manufacturing apparatus for a planar coil antenna.

The rotary-type smart automatic manufacturing apparatus for a planar coil antenna is configured to automatically form a planar coil antenna having a planarized surface by performing planar-coil winding, pressing, cold-pressing, transferring, air spraying, and preheating processes on a received rectangular planar wire while sequentially rotating in one place in a rotary manner.

More particularly, the rotary-type smart automatic manufacturing apparatus for a planar coil antenna according to the present invention includes:
a main body 100 formed to have a rectangular box structure, the main body being configured to protect devices from external pressure and support the devices,
a rotary-type robot drive module 200 located on the left portion of the top surface of the main body, the rotary-type robot drive module being configured to sequentially rotate in a rotary manner so as to be aligned in one-to-one correspondence with a hexagonal coil antenna forming module and configured to support the rear end of a planar coil antenna formed by the hexagonal coil antenna forming module so that the surface of the planar coil antenna is planarized,
the hexagonal coil antenna forming module 300 located around the rotary-type robot drive module so as to face the rotary-type robot drive module in a one-to-one correspondence alignment manner, the hexagonal coil antenna forming module being configured to be operated under the control of a PLC control module so as to automatically form a planar coil antenna having a planarized surface by performing the planar-coil winding, pressing, cold-pressing, transferring, air spraying, and preheating processes,
a touch screen unit 400 located on the right portion of the top surface of the main body, the touch screen unit being configured to display input keys and the operation state of devices on a screen, and
the PLC control module 500 connected to the rotary-type robot drive module, the hexagonal coil antenna forming module, and the touch screen unit, the PLC control module being configured to sequentially control the overall operation of each device and to control the operation of the rotary-type robot drive module and the hexagonal coil antenna forming module in response to a key input value input through the touch screen unit so that a planar coil antenna having a planarized surface is automatically formed through the planar-coil winding, pressing, cold-pressing, transferring, air spraying, and preheating processes.

### [Advantageous effects]

As described above, the present invention has the following effects.

First, the present invention is capable of automatically forming a planar coil antenna having a planarized surface by performing planar-coil winding, pressing, cold-pressing, transferring, air spraying, and preheating processes on a received rectangular planar wire while sequentially rotating in one place in a rotary manner, whereby all processes can be automated.

Second, since the processes can be performed without a large number of workers, it is possible to reduce personnel expenses by 80% compared to the prior art.

Third, when a rectangular planar coil antenna is manufactured, it is possible to manufacture a high-quality planar coil antenna having an evenly planarized surface by primarily planarizing the coil antenna using pressing force and secondarily planarizing the coil antenna using pressing force and a cold spray.

Fourth, a planar coil antenna having a planarized surface can be mass-produced by performing planar-coil winding, pressing, cold-pressing, transferring, air spraying, and preheating processes using a first, a second, a third, a fourth, a fifth and a sixth robot arms, which are operated under the control of a PLC control module.

### [Description of Drawings]

FIG. 1 is a constitutional view illustrating the components of a rotary-type smart automatic manufacturing apparatus 1 for a planar coil antenna according to the present invention;
FIG. 2 is a perspective view illustrating the components of the rotary-type smart automatic manufacturing apparatus 1 for a planar coil antenna according to the present invention;
FIG. 3 is a perspective view illustrating the components of a rotary-type robot drive module according to the present invention;
FIG. 4 is a block diagram illustrating the components of a rotary member according to the present invention;
FIG. 5 is a block diagram illustrating the components of a hexagonal coil antenna forming module according to the present invention;
FIG. 6 is a perspective view illustrating the components of a hybrid-type coil antenna winding unit according to the present invention;
FIG. 7 is a perspective view illustrating the components of a press-type planarization drive module according to the present invention;
FIG. 8 is a perspective view illustrating the components of a hybrid-type planarization drive module according to the present invention;
FIG. 9 is a perspective view illustrating the components of a completed planar coil antenna gripping module according to the present invention;
FIG. 10 is a perspective view illustrating the components of an air spray module according to the present invention;
FIG. 11 is a perspective view illustrating the components of a preheating module according to the present invention;
FIG. 12 is a block diagram illustrating the components of a PLC control module according to the present invention;

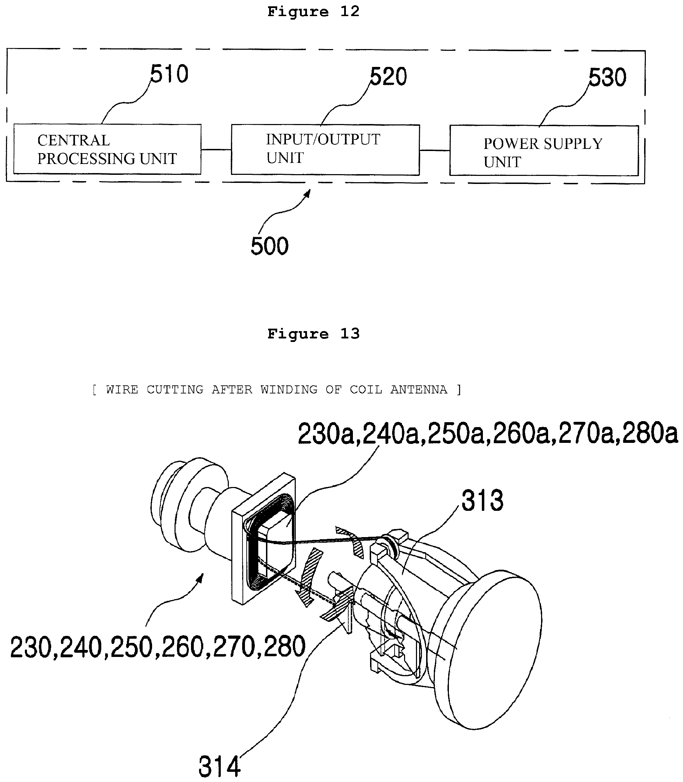

FIG. 13 is an exemplary view illustrating the operation of the present invention in which the hybrid-type coil antenna winding unit of the hexagonal coil antenna forming module is operated to receive a rectangular planar wire, to move it linearly toward a first robot arm of the rotary-type robot drive module, to wind the rectangular planar wire to form a donut-shaped planar coil antenna on the first robot arm while performing rotational movement, and to cut the leftover rectangular planar wire using a wire cutting unit after the rectangular planar wire has been wound on a rectangular support frame;
FIG. 14 is an exemplary view illustrating the operation of the present invention in which, under the control of the PLC control module, the first robot arm of the rotary-type robot drive module is sequentially rotated toward the press-type planarization drive module of the hexagonal coil antenna forming module, and the press-type planarization drive module performs primary planarization on the surface of the planar coil antenna by applying pressing force to the planar coil antenna wound on the first robot arm;
FIG. 15 is an exemplary view illustrating the operation of the present invention in which, under the control of the PLC control module, the first robot arm of the rotary-type robot drive module is sequentially rotated toward the hybrid-type planarization drive module of the hexagonal coil antenna forming module, and the hybrid-type planarization drive module performs secondary planarization on the surface of the planar coil antenna by applying pressing force to the primarily planarized planar coil antenna wound on the first robot arm while air-cooling the planar coil antenna;
FIG. 16 is an exemplary view illustrating the operation of the present invention in which, under the control of the PLC control module, the first robot arm of the rotary-type robot drive module is sequentially rotated toward the completed planar coil antenna gripping module of the hexagonal coil antenna forming module, and the completed planar coil antenna gripping module grips the planar coil antenna, on which the secondary planarization has been completely performed, from the first robot arm, and transfers the planar coil antenna to an outside;
FIG. 17 is an exemplary view illustrating the operation of the present invention in which, under the control of the PLC control module, the first robot arm of the rotary-type robot drive module is sequentially rotated toward the air spray module of the hexagonal coil antenna forming module, and the air spray module removes remaining foreign substances from the first robot arm by spraying air to the first robot arm, from which the completed planar coil antenna has been transferred; and
FIG. 18 is an exemplary view illustrating the operation of the present invention in which, under the control of the PLC control module, the first robot arm of the rotary-type robot drive module is sequentially rotated toward the preheating module of the hexagonal coil antenna forming module, and the preheating module preheats the first robot arm by applying heat to the first robot arm, to which air has been sprayed.

### [Description of Reference Numerals]

1: rotary-type smart automatic manufacturing apparatus for planar coil antenna
100: main body 200: rotary-type robot drive module
300: hexagonal coil antenna forming module 400: touch screen unit
500: PLC control module

### [Best Mode]

A rotary-type smart automatic manufacturing apparatus for a planar coil antenna is capable of automatically forming a planar coil antenna having a planarized surface by performing planar-coil winding, pressing, cold-pressing, transferring, air spraying, and preheating processes on a received rectangular planar wire while sequentially rotating in one place in a rotary manner.

### [Mode for Invention]

Reference will now be made in detail to the preferred embodiments of the present invention, examples of which are illustrated in the accompanying drawings.

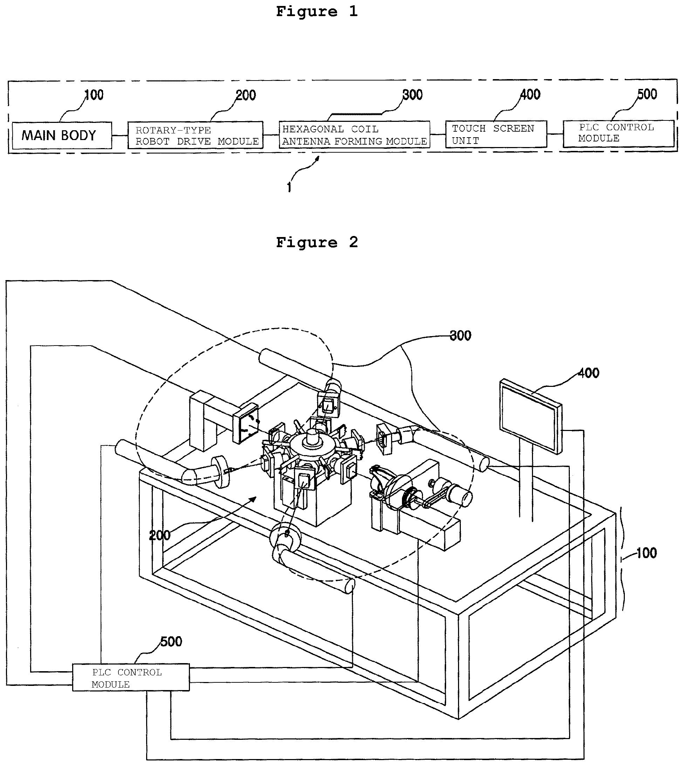

FIG. 1 is a constitutional view illustrating the components of a rotary-type smart automatic manufacturing apparatus 1 for a planar coil antenna according to the present invention, and FIG. 2 is a perspective view illustrating the components of the rotary-type smart automatic manufacturing apparatus 1 for a planar coil antenna according to the present invention. The apparatus is configured to automatically form a planar coil antenna having a planarized surface by performing planar-coil winding, pressing, cold-pressing, transferring, air spraying, and preheating processes on a received rectangular planar wire while sequentially rotating in one place in a rotary manner.

The rotary-type smart automatic manufacturing apparatus 1 for a planar coil antenna, as shown in FIG. 2, specifically includes a main body 100, a rotary-type robot drive module 200, a hexagonal coil antenna forming module 300, a touch screen unit 400, and a PLC control module 500.

Firstly, the main body 100 according to the present invention will be described.

The main body 100 is formed to have a rectangular box structure, and serves to protect various devices from external pressure and support the same.

As shown in FIG. 2, the rotary-type robot drive module is disposed on the left portion of the top surface of the main body, the hexagonal coil antenna forming module is disposed around the rotary-type robot drive module, the touch screen unit is disposed on the right portion of the top surface of the main body, and the PLC control module is disposed at one side of the main body.

In addition, wheels are provided at the bottom surface of the main body to allow the main body to move conveniently.

Next, the rotary-type robot drive module 200 according to the present invention will be described.

The rotary-type robot drive module 200 is located on the left portion of the top surface of the main body, is configured to sequentially rotate in a rotary manner so as to be aligned in one-to-one correspondence with the hexagonal coil antenna forming module, and serves to support the rear end of a planar coil antenna formed by the hexagonal coil antenna forming module so that the surface of the planar coil antenna is planarized.

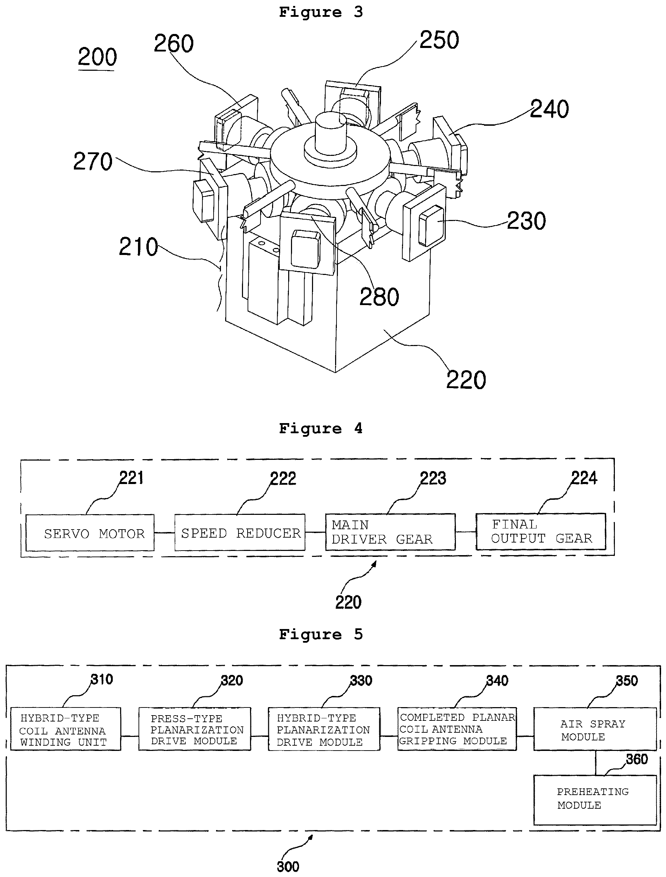

As shown in FIG. 3, the rotary-type robot drive module includes a module body 210, a rotary member 220, a first robot arm 230, a second robot arm 240, a third robot arm 250, a fourth robot arm 260, a fifth robot arm 270, and a sixth robot arm 280.

Firstly, the module body 210 according to the present invention will be described.

The module body 210 is formed to have a radial structure, and serves to protect various devices from external pressure and support the same.

The first, second, third, fourth, fifth and sixth robot arms radially protrude from the module body, and the rotary member is formed at the lower end portion of the module body.

Secondly, the rotary member 220 according to the present invention will be described.

The rotary member 220 is located at the lower end of the module body, and serves to sequentially rotate the first robot arm, the second robot arm, the third robot arm, the fourth robot arm, the fifth robot arm and the sixth robot arm of the module body so that the robot arms are aligned in one-to-one correspondence with the hexagonal coil antenna forming module.

As shown in FIG. 4, the rotary member includes a servo motor 221, a speed reducer 222, a main driver gear 223, and a final output gear 224.

The servo motor 221 is disposed inside a main body of an actuator, and serves to generate rotational force (RPM).

The servo motor is configured such that a permanent magnet is used as a stator and a coil is used as an armature.

In order to constantly control the number of revolutions per minute or the torque, the present invention is configured such that current is controlled by the PLC control module to control the number of revolutions per minute and the torque.

The speed reducer 222 is located at the upper end of a rotary shaft of a DC motor, and serves to reduce the rotational force (RPM) and to increase the torque.

The speed reducer includes a pinion shaft, which is located at a portion that is connected to the DC motor, and a first drive gear and a second drive gear, which are disposed at the distal end of the pinion shaft.

Here, the second drive gear is engaged with a first auxiliary driver gear of the main driver gear.

The main driver gear 223 is engaged with the speed reducer so as to be rotatable, and serves to receive the rotational force and to transmit the rotational force to the final output gear.

The main driver gear includes the first auxiliary driver gear, which is engaged with the second drive gear of the speed reducer and receives the rotational force, and a second auxiliary driver gear, which is located at the lower end of the first auxiliary driver gear so as to be engaged with the final output gear and transmits the rotational force to the final output gear.

The final output gear 224 is located on a power transmission shaft so as to be connected with the main driver gear, and serves to receive the rotational force from the main driver gear and to rotate the first, second, third, fourth, fifth and sixth robot arms.

The final output gear is configured so as to be connected with the second auxiliary driver gear of the main driver gear.

Thirdly, the first robot arm 230 according to the present invention will be described.

The first robot arm 230 protrudes in a predetermined direction from the top surface of the module body so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The first robot arm includes a first limit switch sensor, which is provided on the surface of the first robot arm, so as to be aligned in one-to-one correspondence with the hexagonal coil antenna forming module.

In addition, in order to form a rectangular donut-shaped planar coil antenna, a rectangular support frame 230a is detachably coupled to the front surface of a head of the first robot arm, which faces the hexagonal coil antenna forming module.

Fourthly, the second robot arm 240 according to the present invention will be described.

The second robot arm 240 is arranged at an angle of 60° with respect to the first robot arm so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The second robot arm includes a second limit switch sensor, which is provided on the surface of the second robot arm, so as to be aligned in one-to-one correspondence with the hexagonal coil antenna forming module.

In addition, in order to form a rectangular donut-shaped planar coil antenna, a rectangular support frame 240a is detachably coupled to the front surface of a head of the second robot arm, which faces the hexagonal coil antenna forming module.

Fifthly, the third robot arm 250 according to the present invention will be described.

The third robot arm 250 is arranged at an angle of 60° with respect to the second robot arm so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The third robot arm includes a third limit switch sensor, which is provided on the surface of the third robot arm, so as to be aligned in one-to-one correspondence with the hexagonal coil antenna forming module.

In addition, in order to form a rectangular donut-shaped planar coil antenna, a rectangular support frame 250a is detachably coupled to the front surface of a head of the third robot arm, which faces the hexagonal coil antenna forming module.

Sixthly, the fourth robot arm 260 according to the present invention will be described.

The fourth robot arm 260 is arranged at an angle of 60° with respect to the third robot arm so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The fourth robot arm includes a fourth limit switch sensor, which is provided on the surface of the fourth robot arm, so as to be aligned in one-to-one correspondence with the hexagonal coil antenna forming module.

In addition, in order to form a rectangular donut-shaped planar coil antenna, a rectangular support frame 260a is detachably coupled to the front surface of a head of the fourth robot arm, which faces the hexagonal coil antenna forming module.

Seventhly, the fifth robot arm 270 according to the present invention will be described.

The fifth robot arm 270 is arranged at an angle of 60° with respect to the fourth robot arm so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The fifth robot arm includes a fifth limit switch sensor, which is provided on the surface of the fifth robot arm, so as to be aligned in one-to-one correspondence with the hexagonal coil antenna forming module.

In addition, in order to form a rectangular donut-shaped planar coil antenna, a rectangular support frame 270a is detachably coupled to the front surface of a head of the fifth robot arm, which faces the hexagonal coil antenna forming module.

Eighthly, the sixth robot arm 280 according to the present invention will be described.

The sixth robot arm 280 is arranged at an angle of 60° with respect to the fifth robot arm so as to be aligned in one-to-one correspondence with the hexagonal coil antenna forming module, and is sequentially rotated by receiving the rotational force from the rotary member, thereby supporting the rear end of a planar coil antenna formed by the hexagonal coil antenna forming module so that the surface of the planar coil antenna is planarized.

The sixth robot arm includes a sixth limit switch sensor, which is provided on the surface of the sixth robot arm, so as to be aligned in one-to-one correspondence with the hexagonal coil antenna forming module.

In addition, in order to form a rectangular donut-shaped planar coil antenna, a rectangular support frame 280a is detachably coupled to the front surface of a head of the sixth robot arm, which faces the hexagonal coil antenna forming module.

Next, the hexagonal coil antenna forming module 300 according to the present invention will be described.

The hexagonal coil antenna forming module 300 is located around the rotary-type robot drive module so as to face the rotary-type robot drive module in a one-to-one correspondence alignment manner, and is operated under the control of the PLC control module so as to automatically form a planar coil antenna having a planarized surface by performing planar-coil winding, pressing, cold-pressing, transferring, air spraying, and preheating processes.

As shown in FIG. 5, the hexagonal coil antenna forming module includes a hybrid-type coil antenna winding unit 310, a press-type planarization drive module 320, a hybrid-type planarization drive module 330, a completed planar coil antenna gripping module 340, an air spray module 350, and a preheating module 360.

Firstly, the hybrid-type coil antenna winding unit 310 according to the present invention will be described.

The hybrid-type coil antenna winding unit 310 faces the rotary-type robot drive module in a one-to-one correspondence alignment manner, and is operated under the control of the PLC control module. The hybrid-type coil antenna winding unit receives a rectangular planar wire, moves linearly to the first, second, third, fourth, fifth and sixth robot arms of the rotary-type robot drive module, and winds a donut-shaped planar coil antenna on each of the first, second, third, fourth, fifth and sixth robot arms while performing rotational movement.

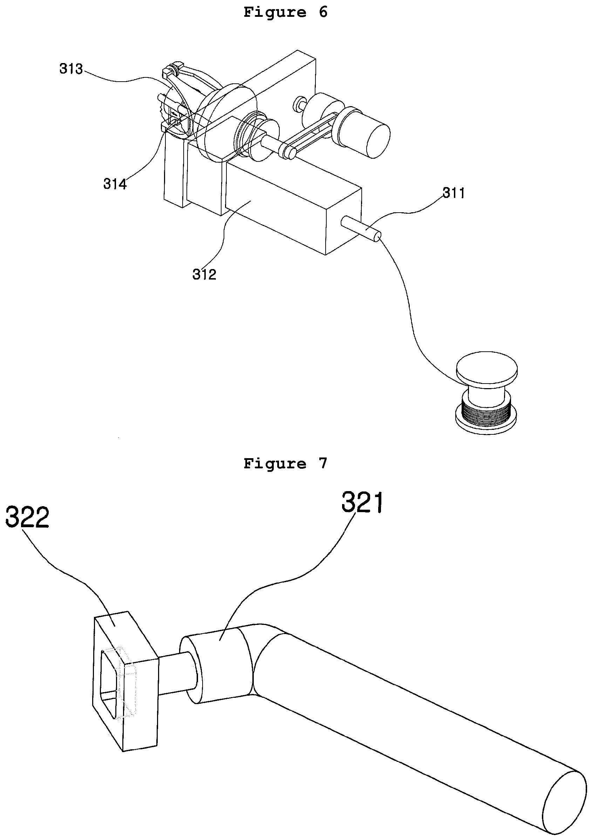

As shown in FIG. 6, the hybrid-type coil antenna winding unit includes a planar wire transfer unit 311, a first X-axis transfer air cylinder 312, a rotary-type head unit 313, and a wire cutting unit 314.

The planar wire transfer unit 311 serves to transfer a rectangular planar wire wound on a planar wire drum to the rotary-type head unit.

The first X-axis transfer air cylinder 312 is located at the rear end of the rotary-type head unit, and serves to move the rotary-type head unit linearly along the X-axis, i.e., in the horizontal direction, with respect to the rotary-type robot drive module.

A second limit switch is mounted to a portion of the first X-axis transfer air cylinder, and a drive signal of the first X-axis transfer air cylinder is transmitted from the PLC control module.

The rotary-type head unit 313 is located at the front end of the first X-axis transfer air cylinder, and serves to form a donut-shaped planar coil antenna by winding the rectangular planar wire on the rectangular support frames of the first, second, third, fourth, fifth and sixth robot arms.

The wire cutting unit 314 serves to cut the leftover rectangular planar wire after the rectangular planar wire has been wound on the rectangular support frames of the first, second, third, fourth, fifth and sixth robot arms.

The wire cutting unit is located inside the rotary-type head unit. When the donut-shaped planar coil antenna is completely wound on each of the rectangular support frames of the first, second, third, fourth, fifth and sixth robot arms by the rotary-type head unit, the wire cutting unit moves linearly from the inside of the rotary-type head unit in the outward direction so as to protrude from the rotary-type head unit, and cuts the leftover rectangular planar wire after the rectangular planar wire has been wound on the rectangular support frames of the first, second, third, fourth, fifth and sixth robot arms.

Secondly, the press-type planarization drive module 320 according to the present invention will be described.

The press-type planarization drive module 320 faces the rotary-type robot drive module in a one-to-one correspondence alignment manner, and is operated under the control of the PLC control module so as to primarily planarize the surface of the planar coil antenna by applying the pressing force to the planar coil antenna wound on each of the first, second, third, fourth, fifth and sixth robot arms.

As shown in FIG. 7, the press-type planarization drive module includes a second X-axis transfer air cylinder 321 and a first upright-type press unit 322.

The second X-axis transfer air cylinder 321 is located at the rear end of the first upright-type press unit, and serves to move the first upright-type press unit linearly along the X-axis, i.e., in the horizontal direction, with respect to the rotary-type robot drive module.

A third limit switch is mounted to a portion of the second X-axis transfer air cylinder, and a drive signal of the second X-axis transfer air cylinder is transmitted from the PLC control module.

The first upright-type press unit 322 is located at the front end of the second X-axis transfer air cylinder, and serves to primarily planarize the surface of the planar coil antenna by applying the pressing force to the planar coil antenna wound on each of the first, second, third, fourth, fifth and sixth robot arms.

Thirdly, the hybrid-type planarization drive module 330 according to the present invention will be described.

The hybrid-type planarization drive module 330 faces the rotary-type robot drive module in a one-to-one correspondence alignment manner, and is operated under the control of the PLC control module so as to secondarily planarize the surface of the planar coil antenna by applying the pressing force to the primarily planarized planar coil antenna wound on each of the first, second, third, fourth, fifth and sixth robot arms while air-cooling the planar coil antenna.

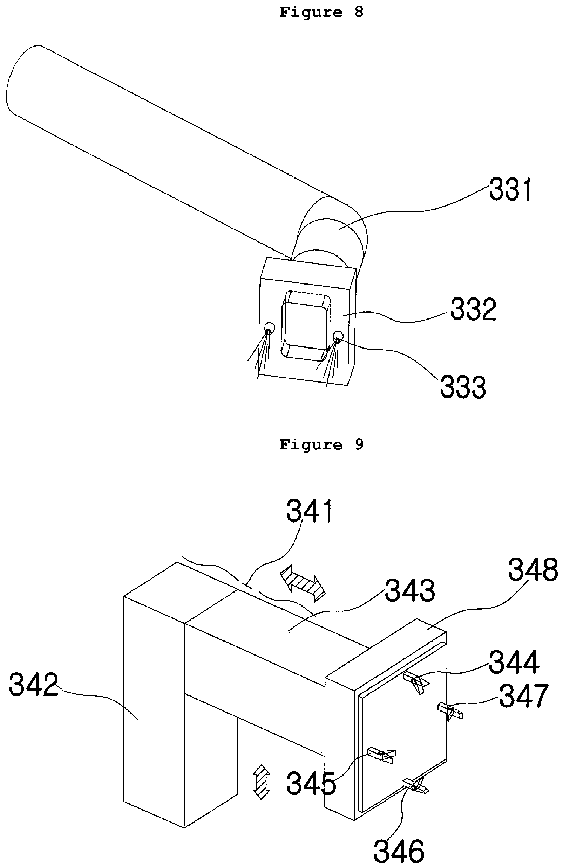

As shown in FIG. 8, the hybrid-type planarization drive module includes a third X-axis transfer air cylinder 331, a second upright-type press unit 332, and a cooling air spray nozzle 333.

The third X-axis transfer air cylinder 331 is located at the rear end of the second upright-type press unit, and serves to move the second upright-type press unit linearly along the X-axis, i.e. in the horizontal direction, with respect to the rotary-type robot drive module.

A fourth limit switch is mounted to a portion of the third X-axis transfer air cylinder, and a drive signal of the third X-axis transfer air cylinder is transmitted from the PLC control module.

The second upright-type press unit 332 is located at the front end of the third X-axis transfer air cylinder, and serves to secondarily planarize the surface of the planar coil antenna by applying the pressing force to the primarily planarized planar coil antenna wound on each of the first, second, third, fourth, fifth and sixth robot arms.

The cooling air spray nozzle 333 is located at a portion of the second upright-type press unit, and serves to spray cooling air toward the primarily planarized planar coil antenna.

At this time, it is possible to secondarily planarize the surface of the planar coil antenna using a cold-forging effect, which is obtained by instantaneously freezing the internal structure of the expanded planar coil antenna using the cooling air and applying the pressing force of the second upright-type press unit to the rear end of the planar coil antenna.

Fourthly, the completed planar coil antenna gripping module 340 according to the present invention will be described.

The completed planar coil antenna gripping module 340 faces the rotary-type robot drive module in a one-to-one correspondence alignment manner, and is operated under the control of the PLC control module so as to transfer the planar coil antenna, on which the secondary planarization has been completely performed, from each of the first, second, third, fourth, fifth and sixth robot arms to the outside by gripping the same using grippers.

As shown in FIG. 9, the completed planar coil antenna gripping module includes a gripping robot body 341, a first Z-axis transfer air cylinder 342, a fourth X-axis transfer air cylinder 343, a first gripper 344, a second gripper 345, a third gripper 346, a fourth gripper 347, and a gripper drive unit 348.

The gripping robot body 341 serves to protect various devices from external pressure and support the same.

The first Z-axis transfer air cylinder 342 is formed at the front end of the gripping robot body in the vertical direction, and serves to move the grippers along the (±) Z-axis.

Here, the +Z-axis refers to the upward direction along a vertical line, and the -Z-axis refers to the downward direction along the vertical line.

A fifth limit switch is mounted to a portion of the first Z-axis transfer air cylinder 342, and a drive signal of the first Z-axis transfer air cylinder is transmitted from the PLC control module.

The fourth X-axis transfer air cylinder 343 is located at the rear ends of the first, second, third and fourth grippers, and serves to move the first, second, third and fourth grippers linearly along the X-axis, i.e., in the horizontal direction, with respect to the rotary-type robot drive module.

A sixth limit switch is mounted to a portion of the fourth X-axis transfer air cylinder, and a drive signal of the fourth X-axis transfer air cylinder is transmitted from the PLC control module.

The first gripper 344 is operated by the gripper drive unit so as to grip the first side of the completed planar coil antenna.

The second gripper 345 is operated by the gripper drive unit so as to grip the second side of the completed planar coil antenna.

The third gripper 346 is operated by the gripper drive unit so as to grip the third side of the completed planar coil antenna.

The fourth gripper 347 is operated by the gripper drive unit so as to grip the fourth side of the completed planar coil antenna.

The gripper drive unit 348 is located at the top ends of the first, second, third and fourth grippers, and serves to operate the first, second, third and fourth grippers so that the grippers perform gripping or releasing operations.

Fifthly, the air spray module 350 according to the present invention will be described.

The air spray module 350 faces the rotary-type robot drive module in a one-to-one correspondence alignment manner, and is operated under the control of the PLC control module so as to remove remaining foreign substances from each of the first, second, third, fourth, fifth and sixth robot arms by spraying air to the robot arms, from which the completed planar coil antenna has been transferred.

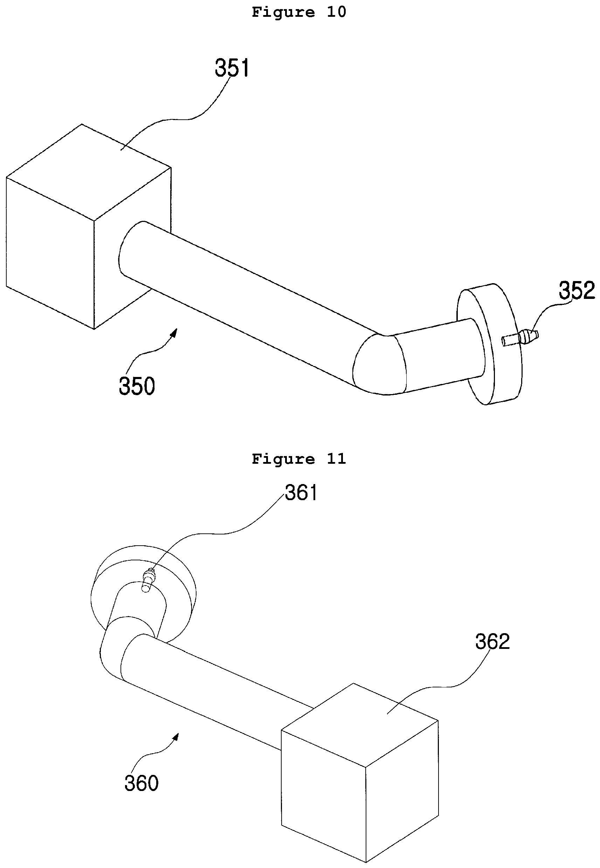

As shown in FIG. 10, the air spray module includes an air spray nozzle 351 and an air tank 352.

Sixthly, the preheating module 360 according to the present invention will be described.

The preheating module 360 faces the rotary-type robot drive module in a one-to-one correspondence alignment manner, and is operated under the control of the PLC control module so as to preheat each of the first, second, third, fourth, fifth and sixth robot arms by applying heat to the robot arms, to which air has been sprayed.

As shown in FIG. 11, the preheating module includes a heating nozzle 361 and a heater 362.

Next, the touch screen unit 400 according to the present invention will be described.

The touch screen unit 400 is located on the right portion of the top surface of the main body, and serves to display input keys and the operation state of devices on a screen.

Next, the PLC control module 500 according to the present invention will be described.

The PLC control module 500 is connected to the rotary-type robot drive module, the hexagonal coil antenna forming module, and the touch screen unit, and sequentially controls the overall operation of each device. The PLC control module controls the operation of the rotary-type robot drive module and the hexagonal coil antenna forming module in response to the key input value input through the touch screen unit so that a planar coil antenna having a planarized surface is automatically formed through the planar-coil winding, pressing, cold-pressing, transferring, air spraying, and preheating processes.

As shown in FIG. 12, the PLC control module includes a central processing unit (CPU) 510, an input/output unit 520, and a power supply unit 530.

The central processing unit (CPU) 510 serves to perform one-to-one sequence control in response to the key input value input through the touch screen unit, to compare a value measured by a sensor, which is input to an input side of the CPU, with a predetermined reference value, and to determine speeds, moving directions and moving times of the rotary-type robot drive module and the hexagonal coil antenna forming module under program control.

The input/output unit 520 serves to receive values measured by the first limit sensor, the second limit sensor, the third limit sensor, the fourth limit sensor, the fifth limit sensor, and the sixth limit sensor, which are connected to an input side of the input/output unit, to transmit the received values to the central processing unit (CPU), and to output control commands of the CPU to the servo motor, the first X-axis transfer air cylinder, the rotary-type head unit, the wire cutting unit, the second X-axis transfer air cylinder, the third X-axis transfer air cylinder, the cooling air spray nozzle, the first Z-axis transfer air cylinder, the fourth X-axis transfer air cylinder, the air spray nozzle, and the heating nozzle, which are connected to an output side of the input/output unit.

The input/output unit includes a photocoupler for preventing noise from being transmitted from external devices to the central processing unit (CPU) and an LED module for displaying the state of the respective contacts of the input and output sides.

The power supply unit 530 serves to supply power to the respective devices.

Hereinafter, the operation of the rotary-type smart automatic manufacturing apparatus for a planar coil antenna according to the present invention will be described in detail.

Firstly, the input keys and the operation state of the devices are displayed on the screen through the touch screen unit.

Subsequently, the rotary-type robot drive module and the hexagonal coil antenna forming module are operated by the PLC control module in response to the key input value input through the touch screen unit.

Subsequently, as shown in FIG. 13, the hybrid-type coil antenna winding unit of the hexagonal coil antenna forming module is operated to receive the rectangular planar wire, to move linearly toward the first robot arm of the rotary-type robot drive module, to wind it to form the donut-shaped planar coil antenna on the first robot arm while performing rotational movement, and to cut the leftover rectangular planar wire using the wire cutting unit after the rectangular planar wire has been wound on the rectangular support frame.

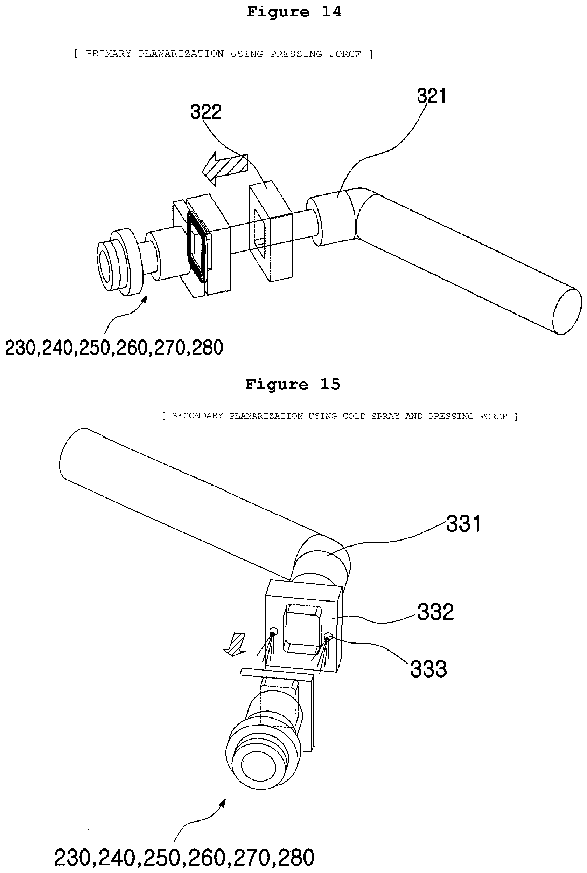

Subsequently, as shown in FIG. 14, under the control of the PLC control module, the first robot arm of the rotary-type robot drive module is sequentially rotated toward the press-type planarization drive module of the hexagonal coil antenna forming module, and the press-type planarization drive module performs primary planarization on the surface of the planar coil antenna by applying the pressing force to the planar coil antenna wound on the first robot arm.

Subsequently, as shown in FIG. 15, under the control of the PLC control module, the first robot arm of the rotary-type robot drive module is sequentially rotated toward the hybrid-type planarization drive module of the hexagonal coil antenna forming module, and the hybrid-type planarization drive module performs secondary planarization on the surface of the planar coil antenna by applying the pressing force to the primarily planarized planar coil antenna wound on the first robot arm while air-cooling the planar coil antenna.

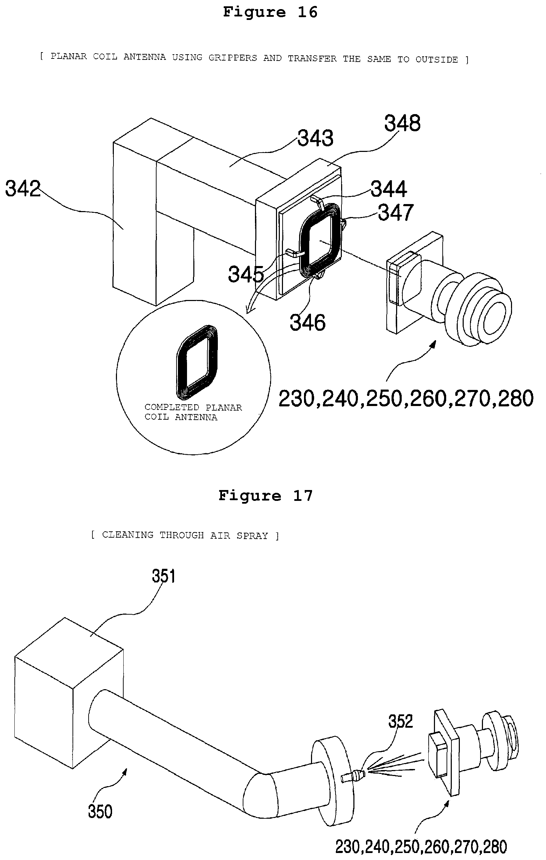

Subsequently, as shown in FIG. 16, under the control of the PLC control module, the first robot arm of the rotary-type robot drive module is sequentially rotated toward the completed planar coil antenna gripping module of the hexagonal coil antenna forming module, and the completed planar coil antenna gripping module grips the planar coil antenna, on which the secondary planarization has been completely performed, from the first robot arm, and transfers the planar coil antenna to the outside.

Subsequently, as shown in FIG. 17, under the control of the PLC control module, the first robot arm of the rotary-type robot drive module is sequentially rotated toward the air spray module of the hexagonal coil antenna forming module, and the air spray module removes remaining foreign substances from the first robot arm by spraying air to the first robot arm, from which the completed planar coil antenna has been transferred.

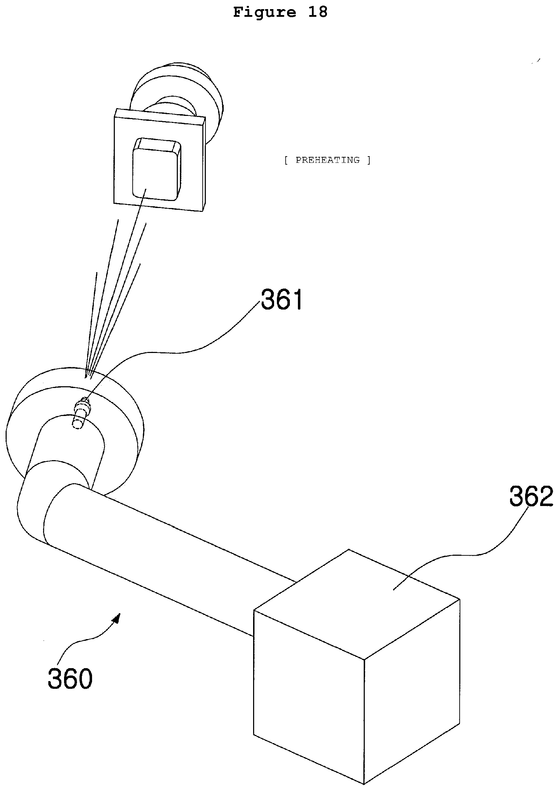

Subsequently, as shown in FIG. 18, under the control of the PLC control module, the first robot arm of the rotary-type robot drive module is sequentially rotated toward the preheating module of the hexagonal coil antenna forming module, and the preheating module preheats the first robot arm by applying heat to the first robot arm, to which air has been sprayed.

In this way, a planar coil antenna having a planarized surface is also automatically formed at each of the second, third, fourth, fifth and sixth robot arms through the planar-coil winding, pressing, cold-pressing, transferring, air spraying, and preheating processes.

### [industrial Applicability]

The present invention is capable of automatically forming a planar coil antenna having a planarized surface by performing planar-coil winding, pressing, cold-pressing, transferring, air spraying, and preheating processes on a received rectangular planar wire while sequentially rotating in one place in a rotary manner, whereby all processes can be automated. Since the processes can be performed without a large number of workers, it is possible to reduce personnel expenses by 80% compared to the prior art. When a rectangular planar coil antenna is manufactured, it is possible to manufacture a high-quality planar coil antenna having an evenly planarized surface by primarily planarizing the coil antenna using pressing force and secondarily planarizing the coil antenna using pressing force and a cold spray. A planar coil antenna having a planarized surface can be mass-produced by performing planar-coil winding, pressing, cold-pressing, transferring, air spraying, and preheating processes using first, second, third, fourth, fifth and sixth robot arms, which are operated under the control of a PLC control module. Therefore, the present invention has high industrial applicability.

## Claims

1. A rotary-type smart automatic manufacturing apparatus for a planar coil antenna, wherein the manufacturing apparatus is configured to receive a rectangular shaped planar wire, and to rotate at one place in a rotary manner so as to automatically form the planar coil antenna having a planarized surface by sequentially performing planar-coil winding, pressing, cold-pressing, transferring, air spraying, and preheating processes.

2. The rotary-type smart automatic manufacturing apparatus according to claim 1, comprising:
a main body (100) including a rectangular box structure, the main body being configured to protect devices from external pressure and support the devices;
a rotary-type robot drive module (200) located on a left portion of a top surface of the main body, the rotary-type robot drive module being configured to sequentially rotate in the rotary manner so as to be aligned in one-to-one correspondence with a hexagonal coil antenna forming module (300) and configured to support a rear end of the planar coil antenna formed by the hexagonal coil antenna forming module so that a surface of the planar coil antenna is planarized,
wherein the hexagonal coil antenna forming module is located around the rotary-type robot drive module so as to face the rotary-type robot drive module in a one-to-one correspondence alignment manner, and is configured to be operated under control of a PLC control module so as to automatically form the planar coil antenna having the planarized surface by performing the planar-coil winding, pressing, cold-pressing, transferring, air spraying, and preheating processes; and
a touch screen unit (400) located on a right portion of the top surface of the main body, the touch screen unit being configured to display input keys and an operation state of the devices on a screen,
wherein the PLC control module (500) is connected to the rotary-type robot drive module, the hexagonal coil antenna forming module, and the touch screen unit, and is configured to sequentially control overall operation of each of the devices and to control operation of the rotary-type robot drive module and the hexagonal coil antenna forming module in response to a key input value input through the touch screen unit so that the planar coil antenna having the planarized surface is automatically formed through the planar-coil winding, pressing, cold-pressing, transferring, air spraying, and preheating processes.

3. The rotary-type smart automatic manufacturing apparatus according to claim 2, wherein the rotary-type robot drive module (200) comprises:
a module body (210) having a radial structure, the module body being configured to protect the devices from external pressure and support the devices; and
a rotary member (220) located at a lower end of the module body, the rotary member being configured to sequentially rotate a first robot arm, a second robot arm, a third robot arm, a fourth robot arm, a fifth robot arm and a sixth robot arm of the module body so that the first robot arm, the second robot arm, the third robot arm, the fourth robot arm, the fifth robot arm and the sixth robot arm are aligned in one-to-one correspondence with the hexagonal coil antenna forming module,
wherein the first robot arm (230) protrudes in a predetermined direction from a top surface of the module body so as to be aligned in one-to-one correspondence with the hexagonal coil antenna forming module, and is configured to be sequentially rotated by receiving rotational force from the rotary member and to support a rear end of the planar coil antenna formed by the hexagonal coil antenna forming module so that the surface of the planar coil antenna is planarized;
wherein the second robot arm (240) is arranged at an angle of 60° with respect to the first robot arm so as to be aligned in one-to-one correspondence with the hexagonal coil antenna forming module, the second robot arm being configured to be sequentially rotated by receiving the rotational force from the rotary member and to support the rear end of the planar coil antenna formed by the hexagonal coil antenna forming module so that the surface of the planar coil antenna is planarized;
wherein the third robot arm (250) is arranged at an angle of 60° with respect to the second robot arm so as to be aligned in one-to-one correspondence with the hexagonal coil antenna forming module, the third robot arm being configured to be sequentially rotated by receiving the rotational force from the rotary member and to support the rear end of the planar coil antenna formed by the hexagonal coil antenna forming module so that the surface of the planar coil antenna is planarized;
wherein the fourth robot arm (260) is arranged at an angle of 60° with respect to the third robot arm so as to be aligned in one-to-one correspondence with the hexagonal coil antenna forming module, the fourth robot arm being configured to be sequentially rotated by receiving the rotational force from the rotary member and to support the rear end of the planar coil antenna formed by the hexagonal coil antenna forming module so that the surface of the planar coil antenna is planarized;
wherein the fifth robot arm (270) is arranged at an angle of 60° with respect to the fourth robot arm so as to be aligned in one-to-one correspondence with the hexagonal coil antenna forming module, the fifth robot arm being configured to be sequentially rotated by receiving the rotational force from the rotary member and to support the rear end of the planar coil antenna formed by the hexagonal coil antenna forming module so that the surface of the planar coil antenna is planarized; and
wherein the sixth robot arm (280) is arranged at an angle of 60° with respect to the fifth robot arm so as to be aligned in one-to-one correspondence with the hexagonal coil antenna forming module, the sixth robot arm being configured to be sequentially rotated by receiving the rotational force from the rotary member and to support the rear end of the planar coil antenna formed by the hexagonal coil antenna forming module so that the surface of the planar coil antenna is planarized.

4. The rotary-type smart automatic manufacturing apparatus according to claim 2, wherein the hexagonal coil antenna forming module (300) comprises:
a hybrid-type coil antenna winding unit (310) configured to face the rotary-type robot drive module in a one-to-one correspondence alignment manner and to be operated under control of the PLC control module, the hybrid-type coil antenna winding unit receiving the rectangular shaped planar wire, moving the planar wire linearly to a first, a second, a third, a fourth, a fifth and a sixth robot arms of the rotary-type robot drive module, and winding the planar wire to form the planar coil antenna having a donut shape on each of the first, second, third, fourth, fifth and sixth robot arms while performing rotational movement;
a press-type planarization drive module (320) configured to face the rotary-type robot drive module in a one-to-one correspondence alignment manner and to be operated under control of the PLC control module so as to primarily planarize the surface of the planar coil antenna by applying pressing force to the planar coil antenna wound on each of the first, second, third, fourth, fifth and sixth robot arms;
a hybrid-type planarization drive module (330) configured to face the rotary-type robot drive module in a one-to-one correspondence alignment manner and to be operated under control of the PLC control module so as to secondarily planarize the surface of the planar coil antenna by applying pressing force to the primarily planarized planar coil antenna wound on each of the first, second, third, fourth, fifth and sixth robot arms while air-cooling the planar coil antenna;
a completed planar coil antenna gripping module (340) configured to face the rotary-type robot drive module in a one-to-one correspondence alignment manner and to be operated under control of the PLC control module so as to transfer the planar coil antenna, which has been secondarily planarized, from each of the first, second, third, fourth, fifth and sixth robot arms to an outside by gripping the planar coil antenna using grippers;
an air spray module (350) configured to face the rotary-type robot drive module in a one-to-one correspondence alignment manner and to be operated under control of the PLC control module so as to remove remaining foreign substances from each of the first, second, third, fourth, fifth and sixth robot arms by spraying air to each of the first, second, third, fourth, fifth and sixth robot arms, from which a completed planar coil antenna has been transferred; and
a preheating module (360) configured to face the rotary-type robot drive module in a one-to-one correspondence alignment manner and to be operated under control of the PLC control module so as to preheat each of the first, second, third, fourth, fifth and sixth robot arms by applying heat to each of the first, second, third, fourth, fifth and sixth robot arms, to which air has been sprayed.

5. The rotary-type smart automatic manufacturing apparatus according to claim 4, wherein the hybrid-type coil antenna winding unit (310) comprises:
a planar wire transfer unit (311) configured to transfer the rectangular shaped planar wire wound on a planar wire drum to a rotary-type head unit;
a first X-axis transfer air cylinder (312) located at a rear end of the rotary-type head unit, the first X-axis transfer air cylinder being configured to move the rotary-type head unit linearly along an X-axis or in a horizontal direction with respect to the rotary-type robot drive module, wherein the rotary-type head unit (313) is located at a front end of the first X-axis transfer air cylinder, the rotary-type head unit being configured to form the donut-shaped planar coil antenna by winding the rectangular shaped planar wire on a rectangular support frame of each of the first, second, third, fourth, fifth and sixth robot arms; and
a wire cutting unit (314) configured to cut a leftover of the rectangular shaped planar wire after the rectangular shaped planar wire has been wound on the rectangular support frame of each of the first, second, third, fourth, fifth and sixth robot arms.

6. The rotary-type smart automatic manufacturing apparatus according to claim 4, wherein the hybrid-type planarization drive module (330) comprises:
a third X-axis transfer air cylinder (331) located at a rear end of a second upright-type press unit (332), the third X-axis transfer air cylinder being configured to move the second upright-type press unit linearly along a X-axis or in a horizontal direction with respect to the rotary-type robot drive module, wherein the second upright-type press unit is located at a front end of the third X-axis transfer air cylinder, and is configured to secondarily planarize the surface of the planar coil antenna by applying pressing force to the primarily planarized planar coil antenna wound on each of the first, second, third, fourth, fifth and sixth robot arms; and
a cooling air spray nozzle (333) located at a portion of the second upright-type press unit, the cooling air spray nozzle being configured to spray cooling air toward the primarily planarized planar coil antenna.

7. The rotary-type smart automatic manufacturing apparatus according to claim 4, wherein the completed planar coil antenna gripping module (340) comprises:
a gripping robot body (341) configured to protect the devices from external pressure and support the devices;
a first Z-axis transfer air cylinder (342) formed at a front end of the gripping robot body in a vertical direction, the first Z-axis transfer air cylinder being configured to move a first gripper, a second gripper, a third gripper and a fourth gripper along a (±)Z-axis; and
a fourth X-axis transfer air cylinder (343) located at rear ends of the first gripper, the second gripper, the third gripper and the fourth gripper, the fourth X-axis transfer air cylinder being configured to move the first gripper, the second gripper, the third gripper and the fourth gripper linearly along a X-axis or in a horizontal direction with respect to the rotary-type robot drive module,
wherein the first gripper (344) is configured to be operated by a gripper drive unit so as to grip a first side of the completed planar coil antenna;
wherein the second gripper (345) is configured to be operated by the gripper drive unit so as to grip a second side of the completed planar coil antenna;
wherein the third gripper (346) is configured to be operated by the gripper drive unit so as to grip a third side of the completed planar coil antenna;
wherein the fourth gripper (347) is configured to be operated by the gripper drive unit so as to grip a fourth side of the completed planar coil antenna; and
wherein the gripper drive unit (348) is located at top ends of the first gripper, the second gripper, the third gripper and the fourth gripper, and is configured to operate the first gripper, the second gripper, the third gripper and the fourth gripper so that the first gripper, the second gripper, the third gripper and the fourth gripper perform gripping or releasing operations.
